# EUROPEAN PATENT APPLICATION

(11) **EP 2 584 440 A1**
(43) Date of publication of application: **24.04.2013**
(21) Application number: 11185490.7
(22) Date of filing: 17.10.2011
(51) Int. Cl.: G06F 3/048, H04M 1/725, G06Q 10/00

(54) **System and method for displaying items on electronic devices**

(71) Applicant: Research in Motion TAT AB, 21140 Malmö (SE)
(72) Inventor: Berglund, Fredrik, 211 40 Malmo (SE)
(74) Representative: Moore, Barry

(57) **Abstract**

A method, computer readable storage medium, and electronic device are provided which display items on such an electronic device by displaying a first set of items, receiving a first gesture on a touch-sensitive panel of the electronic device, and displaying a second set of items, the second set of items being a subset of the first set of items.

## Description

### TECHNICAL FIELD

The following relates generally to displaying items on electronic devices.

### DESCRIPTION OF THE RELATED ART

Many electronic devices, including mobile devices, include one or more touch-sensitive components such as a touch-sensitive display or a touch-pad to provide inputs to the electronic device. The user can provide an input to the touch-sensitive component using an object (e.g. a finger of a user or a stylus) to perform a gesture near or directly on the surface of the touch-sensitive component. For example, the gesture can include tapping an object onto a touch-sensitive display or swiping the object across a portion of the touch-sensitive display in a direction. Other gestures can include more than one object (e.g. two fingers of a user). For example, a gesture can include placing two objects on a touch-sensitive display and bringing the objects closer together to perform a "pinch" gesture or bringing the objects farther apart to perform a "reverse pinch" gesture.

### SUMMARY

In one aspect, there is provided a method of displaying items on an electronic device, the method comprising: displaying a first set of items; receiving a first gesture on a touch-sensitive panel of the electronic device; and displaying a second set of items, the second set of items being a subset of the first set of items.

In another aspect, there is provided a computer readable

### BRIEF DESCRIPTION OF THE DRAWINGS

Examples will now be described making reference to the appended drawings wherein:

FIGS. 1-3 are schematic diagrams of an example display of a mobile device displaying example sets of items.

FIG. 4 is a block diagram of an example of a wireless communication system.

FIG. 5 is a block diagram of an example of a mobile device.

FIG. 6 is a plan view of an example mobile device and a display screen therefor.

FIG. 7 is a plan view of another example mobile device and a display screen therefor.

FIG. 8 is a plan view of examples of touches on the mobile device of FIG. 7.

FIG. 9 is a block diagram of an example configuration of a filter application.

FIG. 10 is a flow diagram of example computer executable instructions for displaying items on an electronic device.

FIGS. 11-16 are schematic diagrams of an example display of a mobile device displaying example sets of items.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practised without these specific details. In other instances, well-known methods, procedures and components have not been described in detail so as not to obscure the examples described herein. Also, the description is not to be considered as limiting the scope of the examples described herein.

The use of gestures on a touch-sensitive panel provides an additional input mechanism to an electronic device. However, gestures typically perform a limited number of functions related to zooming, panning or translating content displayed on an electronic device. For example, a pinch gesture can be used to zoom out of content and the reverse pinch gesture can be used to zoom in to content. In another example, the swipe gesture can be used to pan or scroll content displayed on an electronic device, such as a list of items.

It has been recognized that methods for displaying items on an electronic device such as a mobile device are typically limited in their ability to use gestures. To address this, the following describes a method, computer readable storage medium and mobile device operable to display items on an electronic device.

In one aspect there is provided a method of displaying items on an electronic device, the method comprising: displaying a first set of items, receiving a first gesture on a touch-sensitive panel of the electronic device, and displaying a second set of items, the second set of items being a subset of the first set of items.

In another aspect, there is provided a computer readable storage medium comprising computer executable instructions for displaying items on an electronic device, the computer executable instructions comprising instructions for: displaying a first set of items, receiving a first gesture on a touch-sensitive panel of the electronic device, and displaying a second set of items, the second set of items being a subset of the first set of items.

In yet another aspect, there is provided an electronic device comprising a processor, memory, a display, and a touch-sensitive panel, the memory comprising computer executable instructions for causing the processor to displaying items on an electronic device, the computer executable instructions comprising instructions for: displaying a first set of items, receiving a first gesture on a touch-sensitive panel of the electronic device, and displaying a second set of items, the second set of items being a subset of the first set of items.

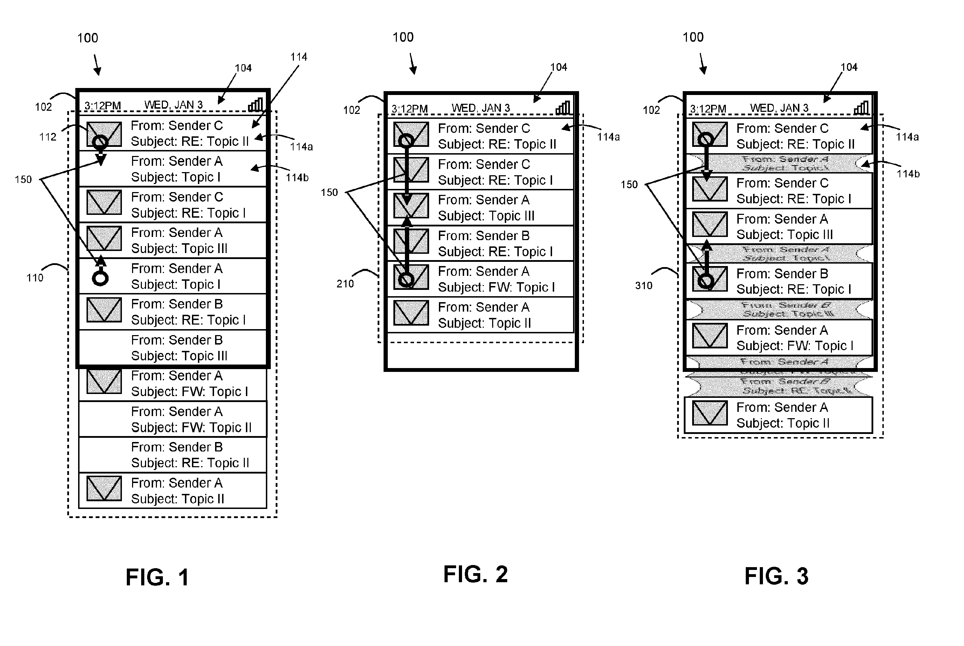

Referring to FIGS. 1-3, schematic diagrams of a display 102 of a mobile device 100 displaying example sets of items are provided. In this example, the display 102 is a touch-sensitive display and the mobile device 100 displays a first set of items 110 on the touch-sensitive display 102. The mobile device 100 can also display a status bar 104 for providing additional information. In the example of FIG. 1, the first set 110 is displayed as a scrollable list of emails. Each item 114, such as items 114a and 114b, can be associated with one or more attributes. In FIG. 1, each item 114 is displayed with the following attributes: sender, subject, and an associated visual indicator such as an unread status indentified by an unread icon 112 if the email has not been viewed by the user. For example, item 114a is an unread email as indicated by the unread icon 112 and item 114b has been viewed as indicated by not having the associated visual indicator such as the unread icon 112 shown in FIG. 1. In other examples, the associated visual indicator (e.g., which determines the subset corresponding to the second set 210), may correspond to new messages (e.g., new email messages) or new and unread messages. It can be appreciated that in general the items may correspond to any message type, including emails. For example, unified inbox may include a plurality of message types including any two or more of email messages, instant messages, social networking messages (e.g., updates, posts, etc.), text messages, multimedia messages, calendar messages, etc. In such an example, each item may include an icon or other visual indicator that is indicative of a message type. It can also be appreciated that, in general, the visual indicator may represent a property of the corresponding item 114, for example an item status. Similar to the above examples, the item status may therefore represent any one of unread messages, new messages, and new and unread messages.

The items may also have a plurality of properties each being represented by a corresponding visual indicator. The received gesture may then select one of the properties such that the second set 210 comprises items 114 that have the selected property. For example, a gesture including a sustained touch on the visual indicator being selected can be used to generate a second set 210 having items with that property.

In one example, the mobile device 100 may be operable to detect a gesture 150 to cause the mobile device 100 to filter the first set 110 to display a second set of items 210 that is a subset of the first set 110 and may be of particular interest to a user. In the example of FIG. 2, a second set 210 including the items having the visual indicator. In this example, the unread email items 114a of the first set 110 are displayed as the second set 210 in response to detecting a pinch gesture 150 by the touch-sensitive display 102. This can allow a user to locate an unread item 114b more quickly by reducing the number of items that a user may need to scroll through, which can be time consuming. Furthermore, filtering in response to a gesture 150, as opposed to selecting a series of tabs, buttons, and/or text entries, may be quicker, more intuitive, and less disruptive to a to a user, thus providing a more seamless user interface.

In another example, the mobile device 100 can be configured to display a transition between the first set 110 and the second set 210. In the example that comprises filtering a list of emails to display only unread emails, the transition may include gradually contracting the read items 114b from the first set 110 to obtain the second set 210. In the example shown in FIG. 3, gradual removal of the read items 114b can be achieved by displaying a "folding" animation of the read email items 114b in a third set of items 310 until they disappear. Displaying a transition between the first set 110 and second set 210 can help a user understand the relationship between the two sets by providing a visual connection. This may allow a user to apply his or her familiarity with the first set 110 to help navigate and more quickly locate an item 114 of interest in the second set 210.

In yet another example, the mobile device 100 can be configured to display the second set 210 only if one or more properties of the gesture 150 exceeds a particular threshold, such as pinching over a predetermined minimum distance on the surface of the touch-sensitive display 102. In FIGS. 1-3, the length of the arrows representing the gestures 150 correspond to the path of the pinching gesture 150. In one example, when the distance covered by the pinching gesture 150 of FIG. 1 is below a first threshold, no filtering is performed on the first set 110 by the mobile device 100 in response to detecting the gesture 150. Once the distance covered by the pinching gesture 150 of FIG. 3 exceeds the first threshold but before a second threshold, the mobile device 100 can display a transition between the first set 110 and the second set 210. Once the distance covered by the pinching gesture 150 of FIG. 2 exceeds the second threshold (to complete the transition) the mobile device 100 may then display the second set 210. It can be appreciated that, if the gesture 150 is performed in reverse, a second transition may includes reversing the animation or visual alteration to re-display the first set 110 once the gesture 150 is removed (e.g. by displaying an "unfolding" animation of the read items 114b until they reappear). Configuring the mobile device 100 to display a transition, whether or not the second set 210 is displayed, can provide to a user, a preview of the second set 210. Providing a preview of the second set 210 may be sufficient to allow a user to find an item 114 of interest without necessarily committing to the filtering action illustrated in FIG. 2.

It can be appreciated that the items 114 being filtered should not be limited to emails displayed as scrollable lists as shown by way of example in FIG. 1. Each item 114 can include other forms of data such as pictures, videos, documents, folders, other files, etc. and the items 114 can be displayed with any one of a number of attributes associated with the item such as an image/thumbnail, filename, icon, date, metadata, etc., and combinations thereof. Furthermore, a set of items may be represented in any suitable form such as a list, grid or array of items.

It can therefore be seen that a gesture 150 can be used to filter items displayed on an electronic device such as a mobile device 100. As will be discussed, the mobile device 100 can be configured to display a set of items in various ways when a gesture 150 is received or detected by the mobile device 100.

Examples of applicable mobile electronic devices may include, without limitation, cellular phones, smart-phones, tablet computers, wireless organizers, personal digital assistants, computers, laptops, handheld wireless communication devices, wirelessly enabled notebook computers, portable gaming devices, and the like. Such devices will hereinafter be commonly referred to as "mobile devices" 100 for the sake of clarity. It will however be appreciated that the principles described herein are also suitable to other electronic devices, e.g. "non-mobile" devices. For example, the principles herein are equally applicable to personal computers (PCs), tabletop computing devices, wall-mounted screens such as kiosks, or any other computing device. Although the principles discussed herein may be applicable to any electronic device, it can be appreciated that enabling sets of items to be filtered as discussed herein is particularly advantageous when viewing items on handheld or portable devices having a relatively smaller form factor and sometimes limited display size.

In one example, the mobile device 100 can be a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

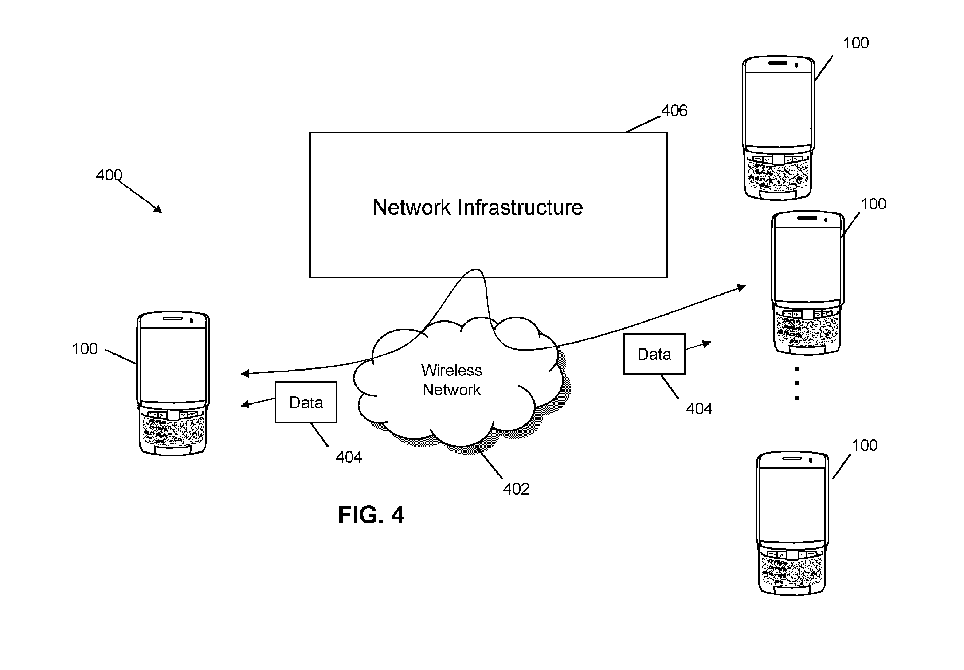

Referring to FIG. 4, an example communication system 400 is shown. The communication system 400, in this example, enables, at least in part, mobile devices 100 to communicate with each other via a wireless network 402. For example, as shown, data 404 may be exchanged between various mobile devices 100. Data 404 that is sent from one mobile device 100 to another mobile device 100 may be transmitted according to a particular messaging or communication medium, protocol, or other mechanism. For example, as shown in FIG. 4, data 404 may be sent over the wireless network 402 via a component of a network infrastructure 406. The network infrastructure 406 can include various systems that may be used by the mobile devices 100 to exchange data 404. For example, a peer-to-peer (P2P) system, a short message service centre (SMSC), an email system (e.g. web-based, enterprise based, or otherwise), a web system (e.g. hosting a website or web service), a host system (e.g. enterprise server), and social networking system may be provided by or within or be otherwise supported or facilitated by the network infrastructure 406. The mobile devices 100 may therefore send data to or receive data from other mobile devices 100 via one or more particular systems with which the mobile devices 100 are communicable via the wireless network 402 and network infrastructure 406.

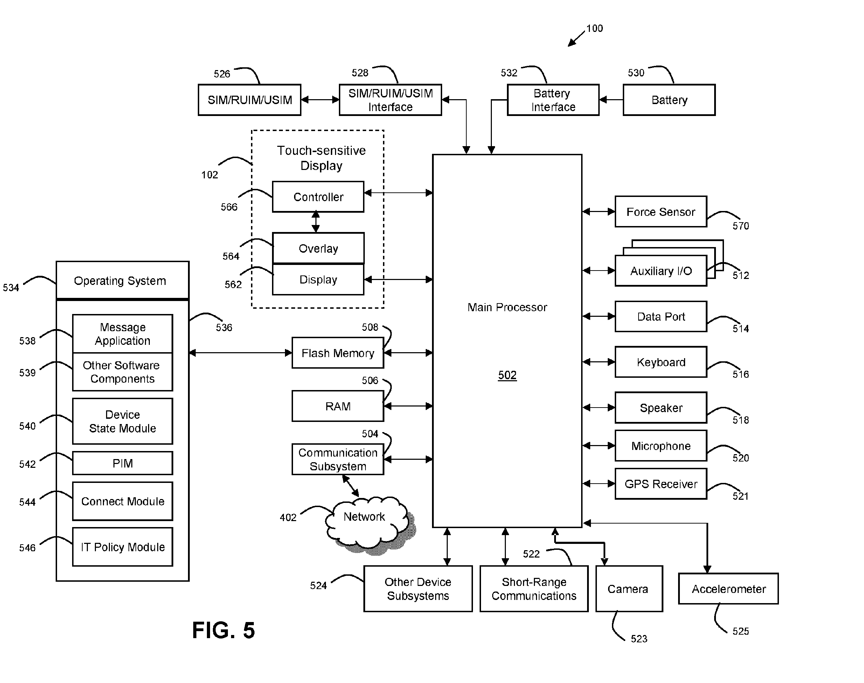

Referring to FIG. 5, a block diagram of an example of a mobile device 100 is provided to aid the reader in understanding the structure of the mobile device 100. The mobile device 100 includes a number of components such as a main processor 502 that controls the overall operation of the mobile device 100. Communication functions, including data and voice communications, are performed through a communication subsystem 504. The communication subsystem 504 receives messages from and sends messages to a wireless network 402. In this example of the mobile device 100, the communication subsystem 504 is configured in accordance with the Global System for Mobile Communication (GSM) and General Packet Radio Services (GPRS) standards, which is used worldwide. Other communication configurations that are equally applicable are the 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behaviour described herein, and it will also be understood by persons skilled in the art that the examples described herein are intended to use any other suitable standards that are developed in the future. The wireless link connecting the communication subsystem 504 with the wireless network 402 represents one or more different Radio Frequency (RF) channels, operating according to defined protocols specified for GSM/GPRS communications.

The main processor 502 also interacts with additional subsystems such as a Random Access Memory (RAM) 506, a flash memory 508, a touch-sensitive display 102, an auxiliary input/output (I/O) subsystem 512, a data port 514, a keyboard 516, a speaker 518, a microphone 520, a GPS receiver 521, short-range communications 522, a camera 523, a accelerometer 525 and other device subsystems 524. Some of the subsystems of the mobile device 100 perform communication-related functions, whereas other subsystems may provide "resident" or on-device functions. By way of example, the display 102 and the keyboard 516 may be used for both communication-related functions, such as entering a text message for transmission over the network 402, and device-resident functions such as a calculator or task list. In one example, the mobile device 100 can also include a non touch-sensitive display in place of, or in addition to, the touch-sensitive display 102

The mobile device 100 can send and receive communication signals over the wireless network 402 after required network registration or activation procedures have been completed. Network access is associated with a subscriber or user of the mobile device 100. To identify a subscriber, the mobile device 100 may use a subscriber module component or "smart card" 526, such as a Subscriber Identity Module (SIM), a Removable User Identity Module (RUIM) and a Universal Subscriber Identity Module (USIM). In the example shown, a SIM/RUIM/USIM 526 is to be inserted into a SIM/RUIM/USIM interface 528 in order to communicate with a network. Without the component 526, the mobile device 100 is not fully operational for communication with the wireless network 402. Once the SIM/RUIM/USIM 526 is inserted into the SIM/RUIM/USIM interface 528, it is coupled to the main processor 502.

The mobile device 100 is typically a battery-powered device and includes a battery interface 532 for receiving one or more rechargeable batteries 530. In at least some examples, the battery 530 can be a smart battery with an embedded microprocessor. The battery interface 532 is coupled to a regulator (not shown), which assists the battery 530 in providing power to the mobile device 100. Although current technology makes use of a battery, future technologies such as micro fuel cells may provide the power to the mobile device 100.

The mobile device 100 also includes an operating system 534 and software components 536 to 546 which are described in more detail below. The operating system 534 and the software components 536 to 546 that are executed by the main processor 502 are typically stored in a persistent store such as the flash memory 508, which may alternatively be a read-only memory (ROM) or similar storage element (not shown). Those skilled in the art will appreciate that portions of the operating system 534 and the software components 536 to 546, such as specific device applications, or parts thereof, may be temporarily loaded into a volatile store such as the RAM 506. Other software components can also be included, as is well known to those skilled in the art.

The subset of software applications 536 that control basic device operations, including data and voice communication applications, may be installed on the mobile device 100 during its manufacture. Software applications may include a message application 538, a device state module 540, a Personal Information Manager (PIM) 542, a connect module 544 and an IT policy module 546. A message application 538 can be any suitable software program that allows a user of the mobile device 100 to send and receive electronic messages, wherein messages are typically stored in the flash memory 508 of the mobile device 100. A device state module 540 provides persistence, i.e. the device state module 540 ensures that important device data is stored in persistent memory, such as the flash memory 508, so that the data is not lost when the mobile device 100 is turned off or loses power. A PIM 542 includes functionality for organizing and managing data items of interest to the user, such as, but not limited to, e-mail, contacts, calendar events, and voice mails, and may interact with the wireless network 402. A connect module 544 implements the communication protocols that are required for the mobile device 100 to communicate with the wireless infrastructure and any host system, such as an enterprise system, that the mobile device 100 is authorized to interface with. An IT policy module 546 receives IT policy data that encodes the IT policy, and may be responsible for organizing and securing rules such as the "Set Maximum Password Attempts" IT policy.

Other types of software applications or components 539 can also be installed on the mobile device 100. These software applications 539 can be pre-installed applications (i.e. other than message application 538) or third party applications, which are added after the manufacture of the mobile device 100. Examples of third party applications include games, calculators, utilities, etc.

The additional applications 539 can be loaded onto the mobile device 100 through at least one of the wireless network 402, the auxiliary I/O subsystem 512, the data port 514, the short-range communications subsystem 522, or any other suitable device subsystem 524.

The data port 514 can be any suitable port that enables data communication between the mobile device 100 and another computing device. The data port 514 can be a serial or a parallel port. In some instances, the data port 514 can be a USB port that includes data lines for data transfer and a supply line that can provide a charging current to charge the battery 530 of the mobile device 100.

For voice communications, received signals are output to the speaker 518, and signals for transmission are generated by the microphone 520. Although voice or audio signal output is accomplished primarily through the speaker 518, the display 102 can also be used to provide additional information such as the identity of a calling party, duration of a voice call, or other voice call related information.

The touch-sensitive display 102 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example, the touch-sensitive display 102 is a capacitive touch-sensitive display which includes a capacitive touch-sensitive overlay 564. The overlay 564 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 562 of the touch-sensitive display 102 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 102. The processor 502 may determine attributes of the touch, including a location of a touch. Touch location data may include an area of contact or a single point of contact, such as a point at or near a center of the area of contact, known as the centroid. A signal is provided to the controller 566 in response to detection of a touch. A touch may be detected from any suitable object, such as a finger, thumb, appendage, or other items, for example, a stylus, pen, or other pointer, depending on the nature of the touch-sensitive display 102. The location of the touch moves as the detected object moves during a touch. The controller 566 and/or the processor 502 may detect a touch by any suitable contact member on the touch-sensitive display 102. Similarly, multiple simultaneous touches, are detected.

One or more gestures are also detected by the touch-sensitive display 102. A gesture is a particular type of touch on a touch-sensitive display 102 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a flick). A swipe has a single direction. The touch-sensitive overlay 564 may evaluate swipes with respect to the origin point at which contact is initially made with the touch-sensitive overlay 564 and the end point at which contact with the touch-sensitive overlay 564 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 564 to initialize the gesture, a horizontal movement of the detected object from the origin point to an end point towards the right or left side of the touch-sensitive overlay 564 while maintaining continuous contact with the touch-sensitive overlay 564, and a breaking of contact with the touch-sensitive overlay 564. Similarly, a vertical swipe typically comprises an origin point towards the top or bottom of the touch-sensitive overlay 564 to initialize the gesture, a horizontal movement of the detected object from the origin point to an end point towards the bottom or top of the touch-sensitive overlay 564 while maintaining continuous contact with the touch-sensitive overlay 564, and a breaking of contact with the touch-sensitive overlay 564.

Swipes can be of various lengths, can be initiated in various places on the touch-sensitive overlay 564, and need not span the full dimension of the touch-sensitive overlay 564. In addition, breaking contact of a swipe can be gradual in that contact with the touch-sensitive overlay 564 is gradually reduced while the swipe is still underway.

Meta-navigation gestures may also be detected by the touch-sensitive overlay 564. A meta-navigation gesture is a gesture that has an origin point that is outside the display area of the touch-sensitive overlay 564 and that moves to a position on the display area of the touch-sensitive display. Other attributes of the gesture may be detected and be utilized to detect the meta-navigation gesture. Meta-navigation gestures may also include multi-touch gestures in which gestures are simultaneous or overlap in time and at least one of the touches has an origin point that is outside the display area and moves to a position on the display area of the touch-sensitive overlay 564. Thus, two fingers may be utilized for meta-navigation gestures. Further, multi-touch meta-navigation gestures may be distinguished from single touch meta-navigation gestures and may provide additional or further functionality.

In some examples, an optional force sensor 570 or force sensors is disposed in any suitable location, for example, between the touch-sensitive display 102 and a back of the mobile device 100 to detect a force imparted by a touch on the touch-sensitive display 102. The force sensor 570 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

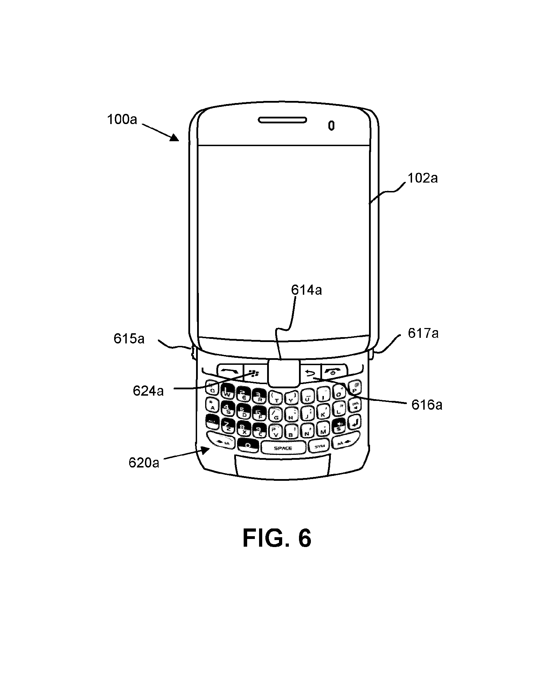

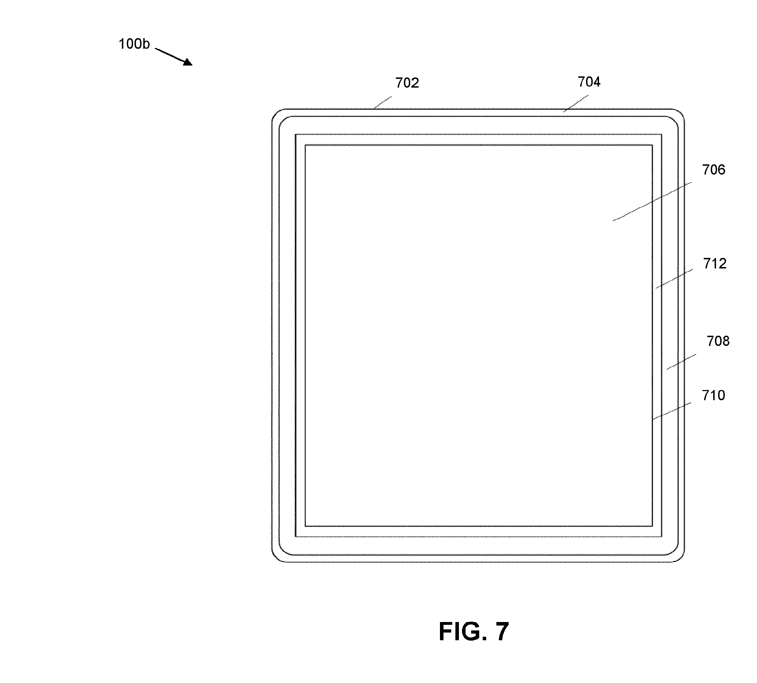

Referring to FIGS. 6 and 7, one example of a mobile device 100a is shown in FIG. 6 and another example of a mobile device 100b is shown in FIG. 7. It will be appreciated that the numeral "100" will hereinafter refer to any mobile device 100, including the examples 100a and 100b, those examples enumerated above or otherwise. It will also be appreciated that a similar numbering convention may be used for other general features common between all figures.

The mobile device 100a shown in FIG. 6 includes a touch-sensitive display 102a and a cursor or positioning device, which in this example is in the form of a trackpad 614a. Trackpad 614a permits multi-directional positioning of a selection indicator or cursor that can be displayed on the touch-sensitive display 102a such that the selection cursor can be moved in an upward, downward, left and right direction, and if desired and/or permitted, in any diagonal direction. A selection cursor may include a box, alteration of an icon or any combination of features that enable the user to identify the currently chosen icon or item. The trackpad 614a in this example is situated on the front face of a housing for mobile device 100a to enable a user to manoeuvre the trackpad 614a while holding the mobile device 100a in one hand. The trackpad 614a may serve as another input member (in addition to a directional or positioning member) to provide selection inputs to a processor of the mobile device and can preferably be pressed in a direction towards the housing of the mobile device 100a to provide such a selection input. It will be appreciated that the trackpad 614a is only one example of a suitable positioning device. For example, a trackball, touch-sensitive display, OLED, or other input mechanism may equally apply.

The mobile device 100a in FIG. 6 also includes a programmable convenience button 615a to activate a selection application such as, for example, a calendar or calculator. Further, mobile device 100a also includes an escape or cancel button 616a, a camera button 617a, a menu or option button 624a and a keyboard 620a. The camera button 617a is able to activate photo and video capturing functions, e.g. when pressed in a direction towards the housing. The menu or option button 624a can be used to load a menu or list of options on the display 102a when pressed. In this example, the escape or cancel button 616a, the menu option button 624a, and a keyboard 620a are disposed on the front face of the mobile device housing, while the convenience button 615a and camera button 617a are disposed at the side of the housing. This button placement enables a user to operate these buttons while holding the mobile device 100a in one hand. The keyboard 620a is, in this example, a standard QWERTY keyboard, however, it will be appreciated that reduced QWERTY or virtual keyboards (e.g. as provided by a touch-sensitive display) may equally apply

It will be appreciated that for the mobile device 100, a wide range of one or more positioning or cursor/view positioning mechanisms such as a touch/track pad, a positioning wheel, a joystick button, a mouse, a touch-screen, a set of arrow keys, a tablet, an accelerometer (for sensing orientation and/or movements of the mobile device 100 etc.), OLED, or other whether presently known or unknown may be employed. Similarly, any variation of keyboard 620a may be used. It will also be appreciated that the mobile devices 100 shown in FIGS. 6 and 7 are for illustrative purposes only and various other mobile devices 100 are equally applicable to the following examples. Other buttons may also be disposed on the mobile device housing such as colour coded "Answer" and "Ignore" buttons to be used in telephonic communications.

A front view of an example of the mobile device 100b is shown in FIG. 7. The mobile device 100b includes a housing 702 that encloses components such as shown in FIG. 3. The housing 702 may include a back, sidewalls, and a front 704 that frames the touch-sensitive display 102. The example mobile device 100b shown in FIG. 7 can represent a portable tablet computer or other handheld or otherwise portable device.

In the shown example of FIG. 7, the touch-sensitive display 102 is generally centered in the housing 702 such that a display area 706 of the touch-sensitive overlay 564 is generally centered with respect to the front 704 of the housing 702. The non-display area 708 of the touch-sensitive overlay 564 extends around the display area 706. In the presently described example, the width of the non-display area is 4 mm.

For the purpose of the present example, the touch-sensitive overlay 564 extends to cover the display area 706 and the non-display area 708. Touches on the display area 706 may be detected and, for example, may be associated with displayed selectable features. Touches on the non-display area 708 may be detected, for example, to detect a meta-navigation gesture. Alternatively, meta-navigation gestures may be determined by both the non-display area 708 and the display area 706. The density of touch sensors may differ from the display area 706 to the non-display area 708. For example, the density of nodes in a mutual capacitive touch-sensitive display, or density of locations at which electrodes of one layer cross over electrodes of another layer, may differ between the display area 706 and the non-display area 708.

Gestures received on the touch-sensitive display 102 may be analyzed based on the attributes to discriminate between meta-navigation gestures and other touches, or non-meta navigation gestures. Meta-navigation gestures may be identified when the gesture crosses over a boundary near a periphery of the display 562, such as a boundary 710 between the display area 706 and the non-display area 708. In the example of FIG. 7, the origin point of a meta-navigation gesture may be determined utilizing the area of the touch-sensitive overlay 564 that covers the non-display area 708.

A buffer region 712 or band that extends around the boundary 710 between the display area 706 and the non-display area 708 may be utilized such that a meta-navigation gesture is identified when a touch has an origin point outside the boundary 710 and the buffer region 712 and crosses through the buffer region 712 and over the boundary 710 to a point inside the boundary 710. Although illustrated in FIG. 7, the buffer region 712 may not be visible. Instead, the buffer region 712 may be a region around the boundary 710 that extends a width that is equivalent to a predetermined number of pixels, for example. Alternatively, the boundary 710 may extend a predetermined number of touch sensors or may extend a predetermined distance from the display area 706. The boundary 710 may be a touch-sensitive region or may be a region in which touches are not detected.

Gestures that have an origin point in the buffer region 712, for example, may be identified as non-meta navigation gestures. Optionally, data from such gestures may be utilized by an application as a non-meta navigation gesture. Alternatively, data from such gestures may be discarded such that touches that have an origin point on the buffer region 712 are not utilized as input at the mobile device 100.

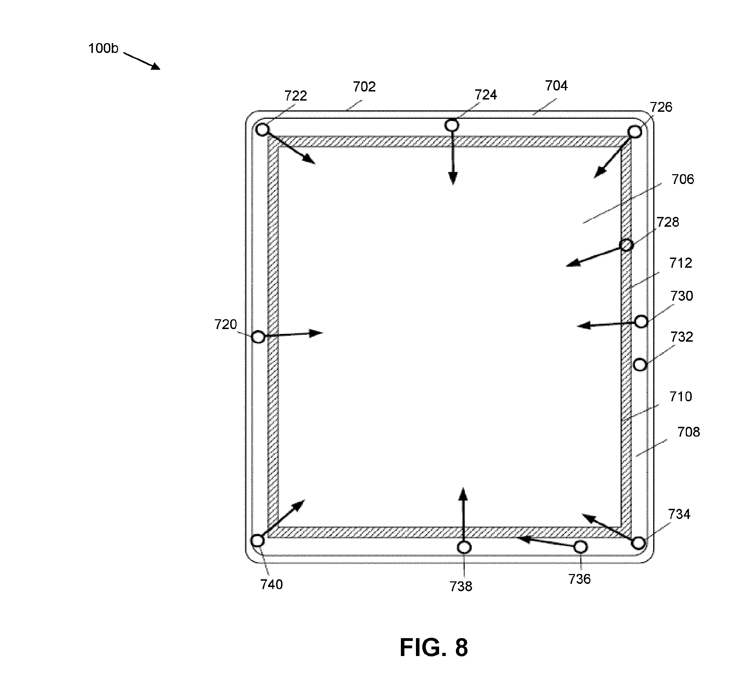

FIG. 8 illustrates examples of touches on the touch-sensitive display 102. The buffer region 712 is illustrated in FIG. 8 by hash markings for the purpose of explanation. As indicated, the buffer region 712 may not be visible to the user. For the purpose of explanation, touches are illustrated by circles at their points of origin. Arrows extending from the circles illustrate the paths of the touches that are gestures.

The touch 738 begins at the origin point outside the boundary 710 and outside the buffer region 712. The path of the touch 738 crosses the buffer region 712 and the boundary 710 and is therefore identified as a meta-navigation gesture. Similarly, the touches 720, 730, 724, 722, 726, 740, 734 each have origin points outside the boundary 710 and the buffer region 712 and their paths cross the buffer region 712 and the boundary 710. Each of the touches 720, 730, 724, 722, 726, 740, 734 is therefore identified as a meta-navigation gesture. The touch 728, however, has an origin point that falls within the buffer region 712 and the touch 728 is therefore not identified as a meta-navigation gesture. The touch 736 begins at an origin point outside the boundary 710 and the buffer region 712. The path of the touch 736, however, does not cross the boundary 710 and is therefore not identified as a meta-navigation gesture. The touch 732 also has an origin point outside the boundary 710 and the buffer region 712 but is not a gesture and therefore does not cross the boundary 710 and is not identified as a meta-navigation gesture.

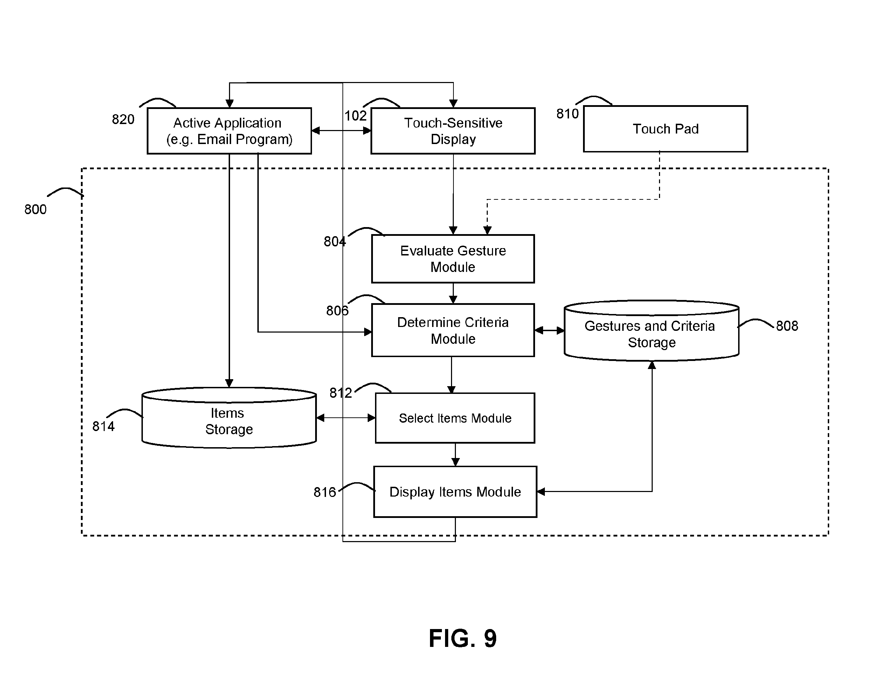

Referring to FIG. 9, an example configuration of a filter application 800 is provided. The filter application 800 can be one of the other software applications 539 of FIG. 5 that can be loaded on the mobile device 100. The filter application 800 can request details of activity occurring in, or receive inputs from, a component that receives gestures 150 such as a touch-sensitive display 102. In another example, the mobile device 100 may include a touch-pad 810 for detecting or receiving gestures 150 and the filter application 800 can receive gestures 150 from the touch-pad 810. The filter application 800 can also can request details of activity occurring in, or receive inputs from, an active application 820 (e.g. email program) that is displaying a first set of items 110 on the display 102 of the mobile device 100. In one example, the active application 820 may also contribute to determining the criterion for filtering the items 114 displayed on the mobile device 100. The active application 820 can be one of the applications 539 of FIG. 5.

The filter application 800 in the example of FIG. 9 includes an evaluate gesture module 804 for receiving and evaluating gestures 150 from a touch-sensitive component such as the touch-sensitive display 102, a determine criteria module 806 for determining one or more criteria associated with a gesture 150 for use in selecting a second set of items 210, a gestures and criteria storage 808 for storing gestures 150 and the respective criterion, a select items module 812 for selecting the second set 210 that satisfies the one or more criteria, an items storage 814 for storing the items 114 that are associated with the active application 820, and a display items module 816 for determining the items 114 to be displayed on the display 102.

The evaluate gesture module 804 receives a gesture 150 from touch-sensitive component such as the touch-sensitive display 102 and determines various information associated with the gesture 150 such as duration, start and stop positions, path, orientation, etc. In one example, the evaluate gesture module 804 determines the type of the gesture 150 (e.g. pinch, reverse pinch, swipe in a direction, etc.) and sends the gesture type to the determine criteria module 806. In another example, the evaluate gesture module 804 can also determine a selection that is made by the gesture 150 and provide the selection to the determine criteria module 806.

The determine criteria module 806 can receive information on a gesture 150 to determine one or more criteria to be used in selecting the second set 210. Information on a gesture 150 is used to determine the criterion associated with the gesture 150. In an example, the determine criteria module 806 can also use information provided by the active application 820 to determine the criterion associated with the gesture 150. The determine criteria module 806 can access and store information on the gestures 150 and the associated criterion in the gestures and criteria storage 808.

The select items module 812 can use the criterion provided by the determine criteria module 806 to select one or more items 114 from the items storage 814 that satisfy the criterion to create a second set 210. The active application 820 can send all the items 114 that can be displayed by the active application 820 to the items storage 814 to be stored for the filter application 800. In the example of FIG. 1, the items storage 814 can store all the emails of the active application 820 (i.e. email program).

The display items module 816 receives the second set 210 provided by the select items module 812. In one example, the display items module 812 provides the second set 210 to the display 102 and instructs the display 102 to display the second set 210. In another example, the display items module 812 sends the second set 210 to the active application 820 and the active application 820 sends the second set 210 to the display 102 and instructs the display 102 to display the second set 210. In yet another example, the display items module 816 can access information on the gesture 150 to determine whether a transition between the first set 110 and second set 210 should be displayed. In one example, the transition which includes a third set of items 310 is sent to the display 102.

It will be appreciated that any module, subsystem component exemplified herein that executes instructions or operations may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data, except transitory propagating signals per se. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 100 or accessible or connectable thereto. Any application or module herein described may be implemented using computer readable/executable instructions or operations that may be stored or otherwise held by such computer readable media.

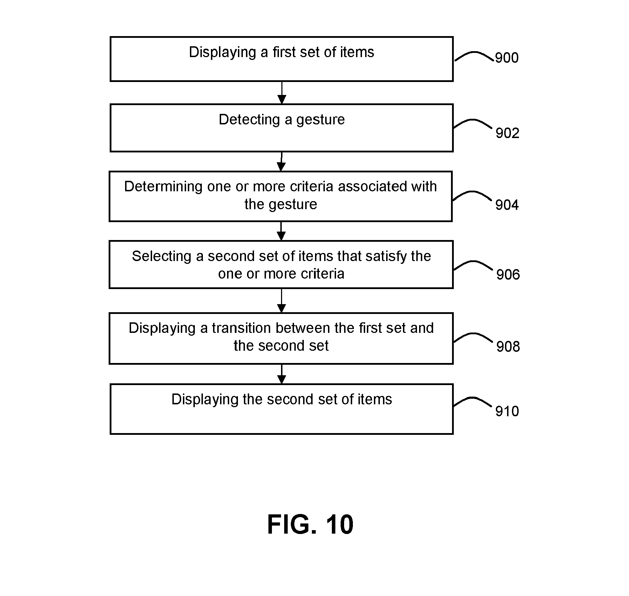

Referring to FIG. 10, an example set of computer executable instructions is provided for displaying items 114 on an electronic device such as a mobile device 100. At block 900, a first set of items is displayed on the mobile device 100. At block 902, a gesture 132 is received or detected from a touch-sensitive panel of the mobile device 100, such as a touch-sensitive display 102 or touch-pad. At block 904, one or more criteria associated with the gesture 150 is determined. At block 906, a second set of the items that satisfy the one or more criteria is selected. At block 908, a transition between the first set and the second set is displayed. At block 910, the second set of items is displayed.

As noted above, at block 900, a first set of items is displayed on the mobile device 100. In an example configuration of the filter application 600, the active application 820 can provide the first set 110 to the touch-sensitive display 102 to implement block 900 (FIG. 9).

As noted above, at block 902, a gesture 150 is received or detected from a touch-sensitive panel of the mobile device 100. In an example configuration, block 902 can be implemented by the touch-sensitive display 102 or the touch pad 810. In the example of FIGS. 1-3, the gesture 150 is a pinch gesture. It can be appreciated that the gesture 150 can be any other gesture that can be detected by a touch-sensitive panel such as a reverse pinch, swipe, rotation, etc.

As noted above, at block 904, one or more criteria associated with the gesture 150 is determined. In one example, the one or more criteria associated with the gesture 150 can be determined from the type of the gesture 150 (e.g. pinch, reverse pinch, swipe in a direction, etc.). In the example of FIGS. 1-3, a pinch gesture is associated with the criterion of an item 114 having the unread email attribute. In an example configuration of the filter application 800, the evaluate gesture module 804 can determine the gesture type, and the determine criteria module 806 can associate the gesture type with a particular criterion (FIG. 9). It can be appreciated that the a different criterion can be associated with the same gesture type for different applications 820. For example, the determine criteria module 806 can associate a pinch gesture with the criterion of having the unread email attribute for an email program and the criterion of being created within the last month for file items in a files explorer program. It can further be appreciated that the association of a gesture type with a particular criterion can be a fixed or customizable setting in an application 820, operating system 534 or filter application 800.

It can be appreciated that the one or more criteria associated with a gesture 150 can incorporate one or more attributes associated with an item 114. Exemplary attributes of an item 114 that can be incorporated into a criterion include an image/thumbnail, size, filename, icon, date, time, status, subject, metadata and other properties of the item, whether displayed on the mobile device 100.

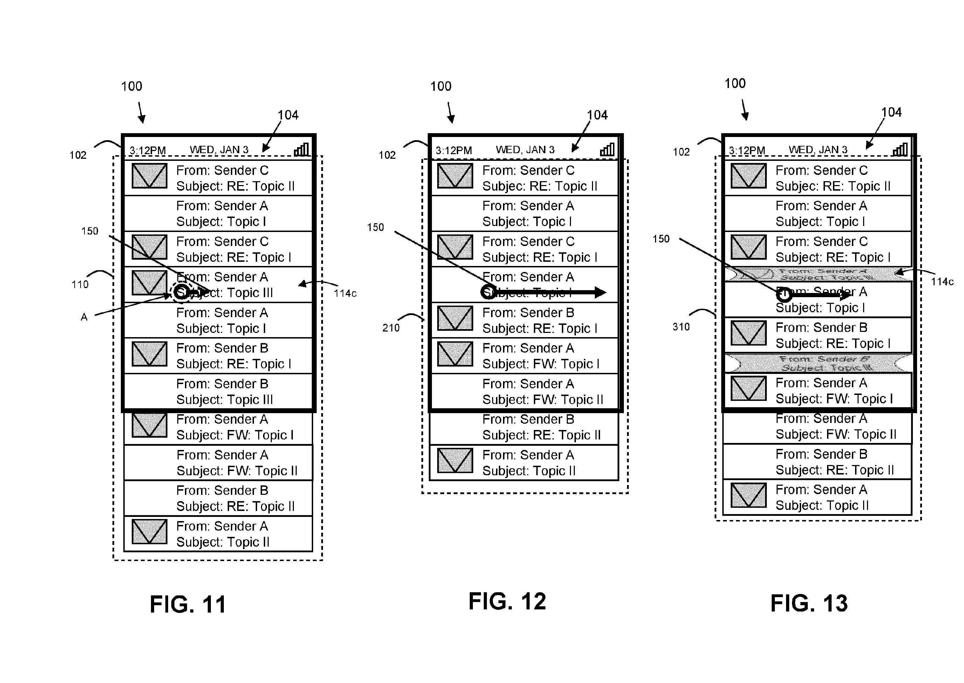

In another example, the criterion may be associated with not having a specific attribute or property. In the example of FIGS. 11-13, a swipe gesture 150 is associated with the criterion of emails that do not have an email subject of "Topic III". In the example of FIGS. 11-13, the gesture 150 can also includes a selection of the specific attribute to be used in determining the criterion associated with the gesture 150. For example, FIG. 11, the start position A of the gesture 150 on the touch-sensitive display 102 can be used as a selection of the attribute displayed at that location of the touch-sensitive display 102. In the example of FIG. 11, the start position A of the gesture 150 on the touch-sensitive display 102 is displaying the subject attribute of an email item 114c having the subject "Topic III". In this example, the evaluate gesture module 804 can determine that the gesture 150 has selected the subject attribute of "Topic III" and the determine criteria module 806 can determine that the swipe gesture 150 is associated with the criterion of removing items with the attribute as selected by the gesture 150, which in the example of FIG. 11 is the attribute of having the subject "Topic III". As a result, the items 114c of the first set 110, which satisfy the criterion of having a subject "Topic III", are not selected in the second set 210 of filtered items (FIG. 12). In another example, the filter application displays a transition between the first set 110 and second set 210, as will be discussed below (FIG. 13).

It can be appreciated that other properties of the gesture 150 can be used to indicate a selection by the gesture 150 such as any point on the path of the gesture 150, or a point that can be derived from the gesture 150 (e.g. a point in between two objects of a pinch or reverse pinch gesture). Furthermore, one or more selections can be made using a gesture 150. For example, the start and stop position of a gesture 150 can each be indicative of a selection, or the start position of each object involved in a multiple touch gesture (e.g. pinch) can be indicative of a selection. The one or more selections provided by the gesture 150 can be incorporated in one or more criteria associated with the gesture 150.

In another example, determining one or more criteria associated with a gesture 150 can depend on the previous gesture and its respective criterion. In the example configuration of FIG. 9, a previous gesture and the associated criterion can be stored in the gestures and criteria storage 808. In an example, if the next gesture 150 detected by the touch-sensitive display 102 is considered to be the opposite or complementary gesture of the previous gesture (as determined by the determine criteria module 806 by comparing the information on the current gesture 150 provided by the evaluate gesture module 804 and the information on the previous gesture as stored in the gestures and criteria storage 808), the criterion associated with the gesture 150 can be determined as reversing the criterion of the previous gesture.

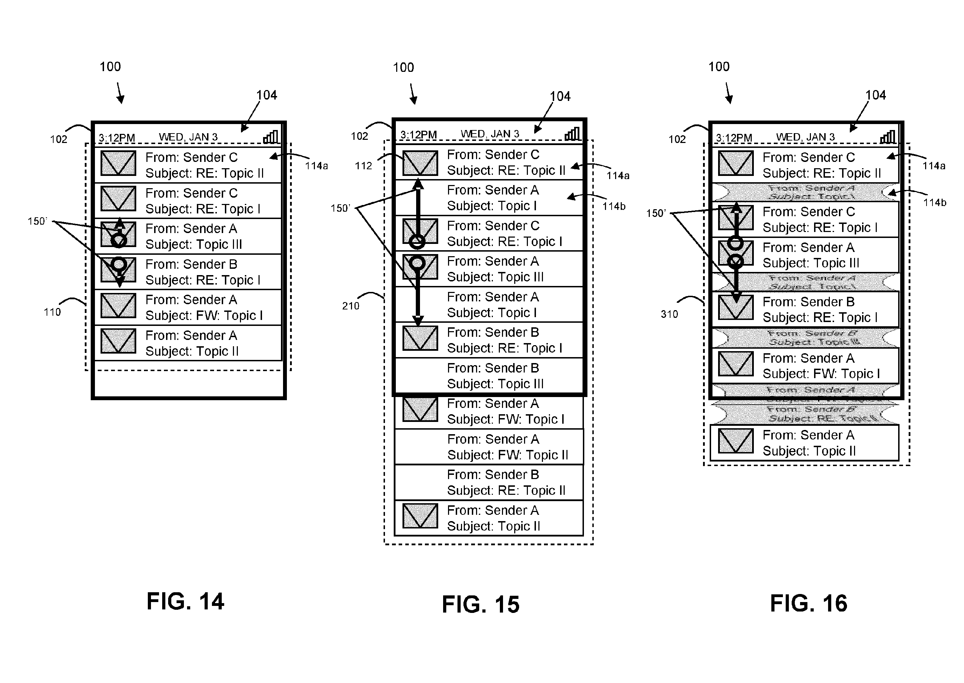

For example, if the pinch gesture 150 of FIGS. 1-3 is the previous gesture (which caused the filter application 800 to select and display only unread email items 114a) and the next gesture (i.e. "complementary" gesture) is a reverse pinch gesture, the filter application 800 can determine the criterion associated with the reverse pinch gesture as reversing the criterion of the previous gesture (i.e. to include all emails into the second set 210). In the examples of FIGS. 14-16, a reverse pinch gesture 150' is applied to a first set 110 displaying only unread email items 114a. The criterion associated with the reverse pinch gesture 150' is determined to reverse the previous gesture by adding all email including read emails 114b into the second set 210 (FIG. 15). A transition between the first set 110 and the second set 210 may also be displayed as a third set 310 where the new items not in the first set 110 (i.e. read items 114b) are gradually expanded until the items 114b are fully displayed (FIG. 16). This configuration allows the filter application 800 to provide a gesture that can reverse the filtering effects of the previous gesture. It can be beneficial to allow a user to return to a previous set of items if a gesture is inadvertently applied, or if the user is finished with the current set of items and would like to return to a previous set.

Example gesture and complementary gesture pairs can include: pinch/reverse pinch, swipes in opposite directions (e.g. up/down, left/right), counter-clockwise/clockwise rotations, and other gestures involving a path and the reverse path.

A first gesture may therefore be used display the second set 210 and receiving a second gesture displays the first set 110 again thus reverting to the original set of items 114. By using complementary first and second gestures, the user can intuitively transition between the sets 110, 210. The first and second gestures may also be considered a single gesture with complementary directions, such as "pinch and let go", "swipe left and swipe right", etc. For example, if a gesture has two complementary directions, receiving the gesture in a first direction can generate the second set 210 with the visual indicator such as the unread icon 112, whereas receiving the gesture in a second direction generates the second set 210 with items not having the visual indicator.

Referring again to FIG. 10, at block 906, a second set of items that satisfy the one or more criteria is selected. In an example configuration, block 906 may be implemented by the select items module 812 which can access the items storage 814 to find all the items 114 that match the one or more criteria.

At block 908, a transition between the first set 110 and the second set 210 can be displayed at block 908. The transition can be displayed to provide a visual relationship between the first set 110 and the second set 210. In one example, the transition can include a third set of items 310 that includes the first set 110 and the second set 210. The items that are to be removed from the first set 110 to obtain the second set 210 can be gradually contracted or "folded" (FIG. 3, items 114b) and the items that are to be added to the first set 110 to obtain the second set 210 can be gradually expanded or "unfolded" (FIG. 16, items 114b).

Although FIGS. 3 and 16 illustrate a "folding" and "unfolding" transition of the items 114b, it can be appreciated that other forms of increasing or decreasing visibility of one or more items uncommon to the first set 110 and second set 210 can be applied such as adjusting the size, brightness, focus, and/or amount of distortion (e.g. changing the perspective by "folding/unfolding") to decrease visibility when items 114 are removed to form the second set 210, and to increase visibility when items 114 are added to form the second set 210.

In one example, a transition can be applied in between displaying the first set 110 and displaying the second set 210. In another example, a transition can be applied if one or more properties of the gesture 150 exceed a predetermined threshold, whether or not the second set 210 is displayed. As discussed earlier, the property can be the distanced travelled by one of the objects performing a pinch gesture 150. It can be appreciated that other properties of a gesture 150 can also be used such as duration, speed, pressure (on the touch-sensitive panel), location, type, etc.

In another example, a transition of increasing or decreasing the visibility of one or more items 114 can be followed by decreasing or increasing the visibility of the same items 114 to reverse the effects of the transition. This can provide a preview to a user of the filtering effects of a particular gesture 150 without actually carrying out the filtering.

At block 910, the second set 210 is displayed. In one example, the second set 210 is only displayed if one or more properties of the gesture 150 exceed a predetermined threshold. As discussed above, the one or more properties of the gesture 150 can include distance, duration, speed, pressure (on the touch-sensitive panel), location, type, etc.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the flow charts and diagrams described herein are just for example. There may be many variations to these steps or operations without departing from the spirit of the invention or inventions. For instance, the steps may be performed in a differing order, or steps may be added, deleted, or modified.

Although the above has been described with reference to certain specific examples, various modifications thereof will be apparent to those skilled in the art as outlined in the appended claims.

## Claims

1. A method of displaying items on an electronic device, the method comprising:
displaying a first set of items;
receiving a first gesture on a touch-sensitive panel of the electronic device; and
displaying a second set of items, the second set of items being a subset of the first set of items.

2. The method of claim 1, the first set of items comprising at least one item having an associated visual indicator, and at least one item not having the visual indicator and, optionally, the second set of items comprising the at least one item having the visual indicator and, optionally, the visual indicator representing a property of the corresponding item and, optionally, the property corresponding to an item status and, optionally, the item status representing one of: unread messages, new messages, and new and unread messages.

3. The method of claim 1 or claim 2, the items comprising a plurality of properties, each of the plurality of properties being represented by a corresponding visual indicator and, optionally, the first gesture for selecting one of the plurality of properties and, optionally, the second set of items comprising the selected property and, optionally, the selecting comprising a sustained touch on the visual indicator corresponding to the selected property.

4. The method of any one of claims 1 to 3, the items corresponding to messages and, optionally, at least some of the messages corresponding to email messages.

5. The method of claim 4, the messages corresponding to a plurality of message types.

6. The method of claim 5, the plurality of message types including any two or more of email messages, instant messages, social networking messages, text messages, multimedia messages, and calendar messages.

7. The method of claim 5, each item having an associated icon indicative of a message type.

8. The method of any one of claims 1 to 7, further comprising:
receiving a second gesture; and
displaying the first set of items.

9. The method of claim 8, the second gesture being complementary to the first gesture.

10. The method of any one of claims 1 to 9, the first gesture comprising complementary directions, wherein receiving the first gesture in a first direction generates a second set of items having a visual indicator, and receiving the first gesture in a second direction generates a second set of items not having the visual indicator.

11. A computer readable storage medium for displaying items on an electronic device, the computer readable storage medium comprising computer executable instructions that when executed by a processor cause the processor to perform the method according to any one of claims 1 to 10.

12. A device comprising a display, a processor, and a memory, the memory storing computer executable instructions that when executed by the processor, cause the processor to perform the method according to any one of claims 1 to 11.

13. A method on a personal electronic device, the method comprising:
displaying in a message store, a plurality of messages;
receiving a gesture input on a touch-sensitive panel of the personal electronic device; and
displaying within the message store a subset of the plurality of messages.

14. The method of claim 13, the plurality of messages comprising at least one read message and at least one unread message.

15. The method of claim 14, the subset of the plurality of messages comprising the unread messages.

## Amended claims

### Amended claims in accordance with Rule 137(2) EPC.

**1.** A method of displaying items on an electronic device, the method comprising:
displaying a first set of items comprising at least one item having a visual indicator and at least one item not having the visual indicator;
receiving a first gesture on a touch-sensitive panel of the electronic device; and
displaying a second set of items, the second set of items being a subset of the first set of items, the second set of items comprising the items in the first set having the visual indicator or comprising the items in the first set not having the visual indicator.

**2.** The method of claim 1, the visual indicator representing a property of the corresponding item and, optionally, the property corresponding to an item status and, optionally, the item status representing one of: unread messages, new messages, and new and unread messages.

**3.** The method of claim 1 or claim 2, the items comprising a plurality of properties, each of the plurality of properties being represented by a corresponding visual indicator and, optionally, the first gesture for selecting one of the plurality of properties and, optionally, the second set of items comprising the selected property and, optionally, the selecting comprising a sustained touch on the visual indicator corresponding to the selected property.

**4.** The method of any one of claims 1 to 3, the items corresponding to messages and, optionally, at least some of the messages corresponding to email messages.

**5.** The method of claim 4, the messages corresponding to a plurality of message types.

**6.** The method of claim 5, the plurality of message types including any two or more of email messages, instant messages, social networking messages, text messages, multimedia messages, and calendar messages.

**7.** The method of claim 5, each item having an associated icon indicative of a message type.

**8.** The method of any one of claims 1 to 7, further comprising:
receiving a second gesture; and
displaying the first set of items.

**9.** The method of claim 8, the second gesture being complementary to the first gesture.

**10.** The method of any one of claims 1 to 9, the first gesture comprising complementary directions, wherein receiving the first gesture in a first direction generates a second set of items having a visual indicator, and receiving the first gesture in a second direction generates a second set of items not having the visual indicator.

**11.** A computer readable storage medium for displaying items on an electronic device, the computer readable storage medium comprising computer executable instructions that when executed by a processor cause the processor to perform the method according to any one of claims 1 to 10.

**12.** A device comprising a display, a processor, and a memory, the memory storing computer executable instructions that when executed by the processor, cause the processor to perform the method according to any one of claims 1 to 10.

**13.** A method on a personal electronic device, the method comprising:
displaying in a message store, a plurality of messages, the plurality of messages comprising at least one message having a visual indicator and at least one message not having the visual indicator;
receiving a gesture input on a touch-sensitive panel of the personal electronic device; and
displaying within the message store a subset of the plurality of messages, the subset of the plurality of messages comprising the messages having the visual indicator or comprising the messages not having the visual indicator.

**14.** The method of claim 13, the plurality of messages comprising at least one read message and at least one unread message.

**15.** The method of claim 14, the subset of the plurality of messages comprising the unread messages.
